# EUROPÄISCHE PATENTSCHRIFT

(11) **EP 2 189 775 B1**
(45) Veröffentlichungstag und Bekanntmachung des Hinweises auf die Patenterteilung: **22.03.2017**
(21) Anmeldenummer: 09012176.5
(22) Anmeldetag: 25.09.2009
(51) Int. Cl.: G01M 1/22, G01M 1/28

(54) **Verfahren und Vorrichtung zur Unwuchtprüfung an mindestens einem Rad eines Kraftfahrzeugs**
Method and device for testing the unbalance of at least one wheel of a motor vehicle
Procédé et dispositif d'essai de l'équilibrage d'au moins une roue d'un véhicule automobile

(30) Priorität: 24.11.2008 DE 102008058771
(43) Veröffentlichungstag der Anmeldung: 26.05.2010
(73) Patentinhaber: Dr. Ing. h.c. F. Porsche AG, 70435 Stuttgart (DE)
(72) Erfinder: Freisinger, Claudius, 70563 Stuttgart (DE); Horst, Herbert, 70806 Kornwestheim (DE); Böker, Uwe, 71404 Korb (DE); Bäumler, Manfred, Dr., 70736 Fellbach (DE)
(74) Vertreter: Sturm, Christoph

(56) Entgegenhaltungen:
- EP-A2- 1 898 197
- US-A- 3 815 425
- US-A1- 2003 041 666
- US-A1- 2006 028 638
- US-A1- 2006 042 380

## Beschreibung

Die Erfindung betrifft ein Verfahren zur Unwuchtprüfung an mindestens einem Rad eines Kraftfahrzeugs. Des Weiteren betrifft die Erfindung eine Vorrichtung zur Unwuchtprüfung an mindestens einem Rad eines Kraftfahrzeugs.

Bei der Montage eines Rads wird ein Reifen auf einer Felge montiert, wobei nach der Montage des Reifens auf der Felge das Rad auf einer Auswuchtmaschine positioniert wird, um mit Hilfe der Auswuchtmaschine eine Unwucht des Rads zu bestimmen und dieselbe mit Hilfe mindestens eines Ausgleichsgewichts, welches auf der Felge des Rads befestigt wird, auszugleichen. Bei neueren Felgentypen werden Ausgleichsgewichte auf die jeweilige Felge geklebt.

Nach der Montage der Räder werden dieselben an einem Kraftfahrzeug montiert, wobei ein Kraftfahrzeug erst dann an einen Kunden ausgeliefert wird, wenn dasselbe auf einem dynamischen Fahrzeugprüfstand dynamische Fahrtests bestanden hat. Bei der Prüfung des Kraftfahrzeugs auf einem dynamischen Fahrzeugprüfstand wird von einer am Fahrzeugsprüfstand arbeitenden Person auch subjektiv die Unwucht der Räder geprüft, nämlich dadurch, dass eine Unwucht von Vorderrädern durch Lenkradzittern am Lenkrad und eine Unwucht von Hinterrädern durch Vibrationen am Fahrzeugsitz erkannt wird. Eine derartige subjektive Unwuchtprüfung erlaubt jedoch keine reproduzierbaren Messergebnisse, da die subjektiv gefühlte Unwucht stark von der persönlichen Einschätzung der am Fahrzeugprüfstand arbeitenden Person abhängig ist. Weiterhin ist es nicht möglich, für jedes am Fahrzeug montierte Rad individuell eine Unwucht zu bestimmen.

US 2006/028638 A1, US 2006/042380 A1, US 3 815 425 A, US 2003/041666 A1 und EP 1 898 197 A2 offenbaren Verfahren und Vorrichtungen zur Unwuchtprüfung nach dem Stand der Technik.

Es besteht Bedarf an einem Verfahren und einer Vorrichtung zur Unwuchtprüfung, mit welchen dann, wenn Räder am Kraftfahrzeug montiert sind, auf objektive und reproduzierbare Art und Weise eine Unwuchtprüfung an den Rädern erfolgen kann, und zwar für jedes Rad individuell während der Fahrt auf einem dynamischen Fahrzeugprüfstand.

Hiervon ausgehend liegt der vorliegenden Erfindung das Problem zu Grunde ein neuartiges Verfahren zur Unwuchtprüfung an mindestens einem Rad eines Kraftfahrzeugs sowie eine entsprechende Vorrichtung zu schaffen.

Dieses Problem wird durch ein Verfahren und eine Vorrichtung im Sinne der unabhängigen Patentansprüche gelöst.

Mit der hier vorliegenden Erfindung ist eine objektive, reproduzierbare Unwuchtprüfung an Rädern eines Kraftfahrzeugs möglich, während das Kraftfahrzeug auf einem dynamischen Fahrzeugprüfstand betrieben wird. Die Unwuchtprüfung kann für jedes Rad individuell erfolgen. Für die Unwuchtprüfung ist keine zusätzliche Prüfzeit erforderlich, da dieselbe während der Zeit durchgeführt wird, während derer das Kraftfahrzeug auf dem dynamischen Fahrzeugprüfstand dynamischen Fahrtests unterzogen wird. Bevorzugte Weiterbildungen der Erfindung ergeben sich aus den Unteransprüchen und der nachfolgenden Beschreibung. Ausführungsbeispiele der Erfindung werden an Hand der Zeichnung
näher erläutert. Dabei zeigt:
- Fig. 1: einen Ausschnitt aus einem eine erfindungsgemäße Vorrichtung zur Unwuchtprüfung aufweisenden Fahrzeugprüfstand im Bereich eines Laserscanners in einer perspektivischen Ansicht;
- Fig. 2: einen perspektivische Ansicht eines Feder-Dämpfer-Massesystems zur Aufnahme eines Laserscanners;
- Fig. 3: ein erstes Diagramm zur Verdeutlichung einer bevorzugten Vorgehensweise bei der Unwuchtermittlung;
- Fig. 4: ein zweites Diagramm zur Verdeutlichung einer bevorzugten Vorgehensweise bei der Unwuchtermittlung; und
- Fig. 5: ein drittes Diagramm zur Verdeutlichung einer bevorzugten Vorgehensweise bei der Unwuchtermittlung.

Die hier vorliegende Erfindung betrifft die Unwuchtprüfung an Rädern, die an einem Kraftfahrzeug montiert sind, und zwar auf objektive und reproduzierbare sowie automatische Art und Weise während ein Kraftfahrzeug auf einem dynamischen Fahrzeugprüfstand, einem sogenannten Scheitelrollenprüfstand, betrieben wird.

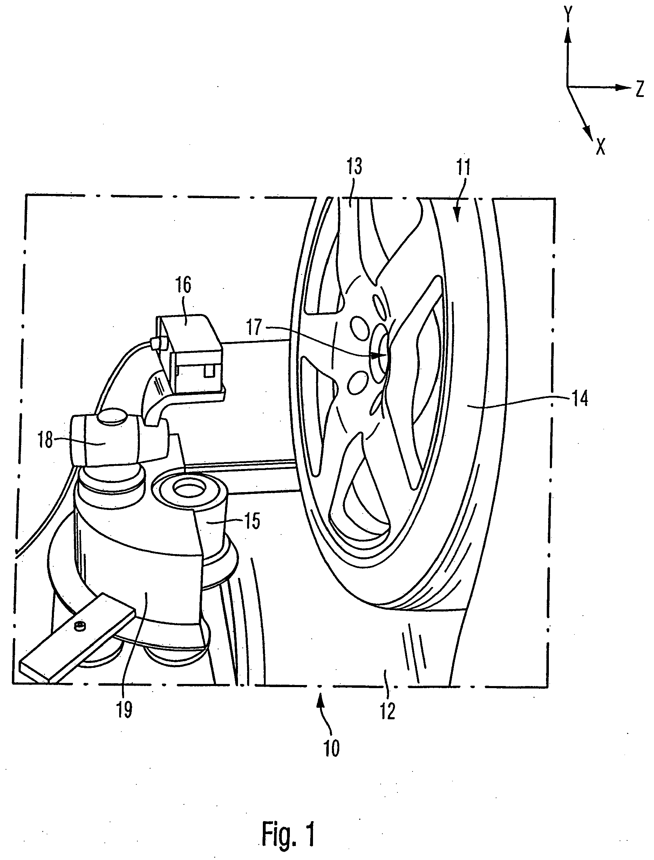

Fig. 1 zeigt einen Ausschnitt aus einem dynamischen Fahrzeugprüfstand 10, wobei ein Kraftfahrzeug mit einem Rad 11 auf einer Rolle 12 des Fahrzeugprüfstands positioniert ist. Das Rad 11 umfasst einen auf einer Felge 13 montierten Reifen 14. Seitlich der Rolle 12 des Fahrzeugprüfstands 10 ist eine seitliche Anlaufrolle 15 des Fahrzeugprüfstands gezeigt, die verhindert, dass das auf dem Fahrzeugprüfstand betriebene Fahrzeug mit dem in Fig. 1 gezeigten Rad 11 seitlich von der Rolle 12 rutschen kann.

Für jedes im Hinblick auf eine mögliche Unwucht zu überprüfende Rad 11 ist eine im bevorzugten Ausführungsbeispiel als Laserscanner 16 ausgebildete, berührungslose Messeinrichtung vorhanden, die auf eine Radnabe des Rads 11 ausgerichtet ist. Der in Fig. 1 gezeigte Laserscanner 16 vermisst das Rad 11 während des Betreibens des Kraftfahrzeugs auf dem dynamischen Fahrzeugprüfstand derart, dass der Laserscanner 16 je Umdrehung des Rads 11 mehrfach eine vordere und eine hintere Begrenzung oder eine obere und eine untere Begrenzung einer Felgenbohrung 17 der Felge 13 detektiert, wobei aus dem Abstand der vorderen und hinteren Begrenzung oder dem Anstand der oberen und unteren Begrenzung der Felgenbohrung 17 der Mittelpunkt der Felgenbohrung 17 des Rads 11 ermittelt wird.

Aus der Veränderung der je Umdrehung des jeweiligen Rads mehrfach ermittelten Mittelpunkte der Felgenbohrung 17 wird eine Unwucht des Rads 11 ermittelt.

Es liegt demnach im Sinne der hier vorliegenden Erfindung, dass dann, wenn ein Kraftfahrzeug auf einem dynamischen Fahrzeugprüfstand 10 betrieben wird, mit Hilfe von Laserscannern 16 die sich drehenden Räder 11 des Kraftfahrzeugs vermessen werden, und zwar derart, dass je Rad 11 mit jeweils einem Laserscanner 16 mehrfach pro Umdrehung eines Rads 11 der Mittelpunkt einer Felgenbohrung 17 des jeweiligen Rads 11 ermittelt wird, wobei dann, wenn die je Umdrehung des Rads 11 ermittelten Mittelpunkte einer starken Veränderung unterliegen, auf eine Unwucht des jeweiligen Rads 11 geschlossen wird. Das Maß der Veränderung ist dabei ein Maß für die Unwucht.

Der Mittelpunkt einer Felgenbohrung 17 wird derart ermittelt, dass aus geometrischen Kenngrößen der Felge 13, die mit Hilfe des jeweiligen Laserscanners 16 messtechnisch erfasst werden, eine vordere Begrenzung und hintere Begrenzung der Felgenbohrung 17 oder eine obere Begrenzung und untere Begrenzung der Felgenbohrung 17 detektiert wird, wobei aus der vorderen Begrenzung und der hinteren Begrenzung oder aus der oberen Begrenzung und unteren Begrenzung der Mittelpunkt der Felgenbohrung 17 berechnet wird.

Die Ermittlung der oberen Begrenzung und unteren Begrenzung der Felgenbohrung 17 ist bevorzugt. Es ist auch möglich, die vordere Begrenzung und hintere Begrenzung der Felgenbohrung 17 zu bestimmen, wobei in diesem Fall dann noch eine Brems- und Beschleunigungsbewegung des Kraftfahrzeugs auf dem dynamischen Fahrzeugprüfstand 10 ausgefiltert werden muss, um den Einfluss dieser Bewegungen zu eliminieren.

Der jeweilige Laserscanner 16 ist auf das jeweilige Rad 11 parallel zu einer Achse, an welcher das jeweilige Rad 11 aufgehängt ist, ausgerichtet, wobei in Fig. 1 die Achse, an der das Rad 11 aufgehängt ist, in Z-Richtung verläuft. Der Laserscanner 16 ist demnach in Z-Richtung parallel zu der Kraftfahrzeugachse, an welcher das Rad 11 aufgehängt ist, ausgerichtet.

Der Laserscanner 16 ist dabei in Y-Richtung in etwa in der Höhe der Radnabe und in X-Richtung auf die Mitte derselben gerichtet. Zur exakten Ausrichtung des Laserscanners 16 zum jeweiligen Rad 11 dient eine Justiereinrichtung 18. Der Laserscanner 16 ist seitlich neben der Rolle 12 des Fahrzeugprüfstands 10 ortsfest montiert.

Jeder Laserscanner 16 ist vorzugsweise auf einer Aufnahme 19 befestigt, die als Feder-Dämpfer-Massesystem ausgebildet ist und eine Eigenfrequenz aufweist, die eine Entkopplung vom Prüfstand erzeugt, insbesondere einen deutlichen Abstand von einer Drehfrequenz des zu vermessenden Rads 11 und Störfrequenz der Umgebung aufweist. Das Feder-Dämpfer-Massesystem 19 ist dabei in Bezug auf die Drehfrequenz des Rads 11 entweder unterkritisch oder überkritisch ausgelegt.

Vorzugsweise verfügt das Feder-Dämpfer-Massesystem über eine Eigenfrequenz von weniger als 5 Hz.

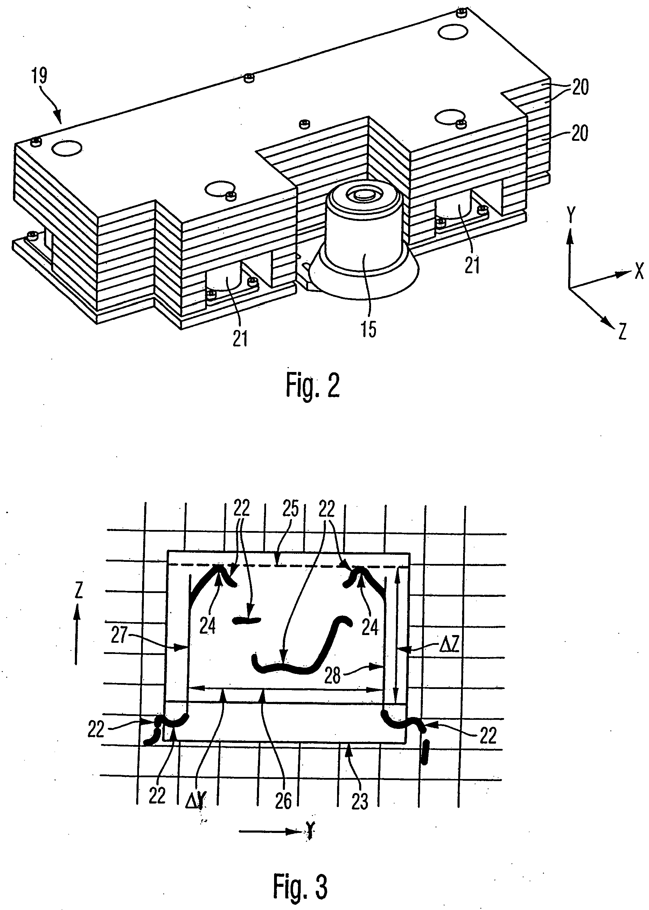

Im Ausführungsbeispiel der Fig. 2 ist die als Feder-Dämpfer-Massesystem ausgebildete Aufnahme 19 aus mehreren Platten 20 zusammengesetzt, um eine einfache Montage desselben im Bereich des Fahrzeugprüfstands zu ermöglichen. Die Masse des Feder-Dämpfer-Massesystems 19 beträgt vorzugsweise mehr als 150 kg.

Im Ausführungsbeispiel der Fig. 2 umfasst das Feder-Dämpfer-Massesystem bzw. die Aufnahme 19 Luftdämpfer 21, wobei der in den Luftdämpfern 21 herrschende Luftdruck messtechnisch erfasst und entsprechende Messwerte zur Regelung des Luftdrucks in den Luftdämpfern verwendet werden können. Die Verwendung von Luftdämpfern ist jedoch rein optional, es können auch andere Dämpfersysteme zum Einsatz kommen.

Je Umdrehung des in Fig. 1 gezeigten Rads 11 wird dasselbe vom Laserscanner 16 mehrfach vermessen, nämlich im Bereich seiner Radnabe, wobei Fig. 3 stark schematisiert ein Messbild des Laserscanners 16 zeigt. So sind in Fig. 3 über der Erstreckung der Felge 13 bzw. des Rads 11 in Y-Richtung Messsignale 22 des Laserscanners 16 in Z-Richtung aufgetragen, wobei der Laserscanner 16 dann ein Messsignal 22 bereitstellt, wenn sich die Oberflächenkontur der Felge 16 in Z-Richtung ändert.

Die in Fig. 3 gezeigten Messsignale 22 werden nach einem bevorzugten Ausführungsbeispiel der Erfindung zur Ermittlung des Mittelpunkts der Felgenbohrung 17 derart ausgewertet, dass nach Definition eines Messfelds 23 im Messfeld Hochpunkte 24 der Messsignale 22 ermittelt werden, durch die eine in Fig. 3 in gestrichelter Linienführung gezeichnete Gerade 25 gelegt wird. Bei den Hochpunkten 24 der Messsignale 22 handelt es sich um geometrische Kenngrößen der Felge 13 im Bereich der Felgenbohrung 17.

Nach Ermittlung der Hochpunkte 24 sowie der Geraden 25 wird die Gerade 25 um einen felgenabhängigen Betrag ΔZ parallel verschoben, wobei in Fig. 3 die durch Parallelverschiebung der Geraden 25 erzeugte Gerade 26 in durchgezogener Linienführung gezeigt ist. Dort, wo ausgehend von kleinen Messwerten 22 in Z-Richtung dieselben den durch die Gerade 26 definierten Betrag unterschreiten, wird eine seitliche Begrenzung der Felgenbohrung 17 detektiert, wobei in Fig. 3 durch eine Gerade 27 eine obere Begrenzung der Felgenbohrung und durch eine Gerade 28 eine untere Begrenzung der Felgenbohrung gezeigt ist. Aus dem Abstand ΔY zwischen diesen Begrenzungen 27 und 28 der Felgenbohrung 17 kann deren Mittelpunkt errechnet werden.

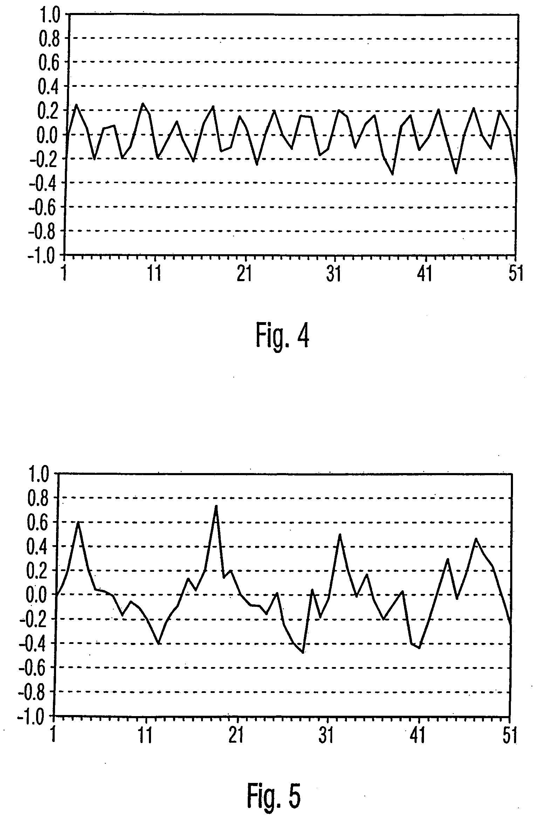

Je Umdrehung des Rads 11 werden auf die obige Art und Weise mehrere Mitteilpunkte der Felgenbohrung 17 ermittelt, wobei in Fig. 4 und 5 über der Zeit t die Positionen der so ermittelten Mittelpunkte der jeweiligen Felgenbohrung 17 aufgetragen sind. Fig. 4 kann entnommen werden, dass die ermittelten Positionen der Mittelpunkte der Felgenbohrung 17 nur einer geringen Veränderung unterliegen, wobei dann für den Fall der Fig. 4 darauf geschlossen wird, dass am Rad 11 keine Unwucht vorliegt. In Fig. 5 hingegen unterliegen die ermittelten Mittelpunkte der Felgenbohrung 17 einer starken Veränderung, wobei das Maß dieser Veränderung ein Maß für die Unwucht an dem Rad 11 ist.

Die erfindungsgemäße Unwuchtprüfung erfolgt online während des Tests eines Kraftfahrzeugs auf einem dynamischen Fahrzeugprüfstand und demnach parallel zu fahrdynamischen Tests auf dem Fahrzeugprüfstand, woraus folgt, dass zur erfindungsgemäßen Unwuchtprüfung keine zusätzliche Zeit benötigt wird. Die Unwuchtprüfung kann für jedes Rad des Kraftfahrzeugs individuell durchgeführt werden. Die Unwuchtprüfung erfolgt vollständig automatisch und liefert reproduzierbare, objektive Messergebnisse.

Zur obigen Unwuchtprüfung wird das Kraftfahrzeug auf dem Kraftfahrzeugprüfstand vorzugsweise mit einer Geschwindigkeit von 100 km/h betrieben. Dann, wenn das Kraftfahrzeug auf dem Prüfstand mit in etwa 40 km/h betrieben wird, kann auf die obige Art und Weise auch auf einen sogenannten Standplatten am kalten, durch längeren Stillstand deformierten Reifen geschlossen werden.

Je Umdrehung des Rads werden vorzugsweise mehr als zehn Messungen mit dem Laserscanner 16 durchgeführt, um je Radumdrehung mindestens zehnmal den Mittelpunkt der Felgenbohrung 17 zu bestimmen.

Die obige berührungslose Messung erfolgt vorzugsweise mit Hilfe von Laserscannern. Es könne auch andere berührungslose Messeinrichtungen wie z.B. Kameras zum Einsatz kommen.

### Bezugszeichenliste

- 10: Fahrzeugprüfstand
- 11: Rad
- 12: Rolle
- 13: Felge
- 14: Reifen
- 15: Anlaufrolle
- 16: Laserscanner
- 17: Felgenbohrung
- 18: Justiereinrichtung
- 19: Aufnahme
- 20: Platten
- 21: Luftdämpfer
- 22: Messsignal
- 23: Messfeld
- 24: Hochpunkt
- 25: Gerade
- 26: Gerade
- 27: Gerade
- 28: Gerade

## Patentansprüche

1. Verfahren zur Unwuchtprüfung an mindestens einem Rad (11) eines Kraftfahrzeugs während dem Betreiben des Kraftfahrzeugs auf einem dynamischen Fahrzeugprüfstand, wobei das oder jedes im Hinblick auf eine mögliche Unwucht zu überprüfende Rad (11) mit einer auf eine Radnabe des jeweiligen Rads ausgerichteten, berührungslosen Messeinrichtung vermessen wird, wobei die jeweilige berührungslose Messeinrichtung auf das jeweilige Rad (11) parallel zur einer Achse, an welcher das jeweilige Rad (11) aufgehängt ist, und damit in Richtung einer Querachse des Kraftfahrzeugs ausgerichtet, in Richtung einer Hochachse des Kraftfahrzeugs in etwa in der Höhe der Radnabe und in Richtung einer Längsachse des Kraftfahrzeugs auf die Mitte der Radnabe gerichtet ist, und wobei die jeweilige berührungslose Messeinrichtung das jeweilige Rad (11) derart vermisst, dass je Umdrehung des jeweiligen Rads (11) mehrfach eine vordere und hintere Begrenzung oder eine obere und untere Begrenzung einer Felgenbohrung (17) detektiert und aus dem Abstand derselben die Position des Mittelpunkts der Felgenbohrung des jeweiligen Rads ermittelt wird, wobei aus der Veränderung der so je Umdrehung des jeweiligen Rads (11) ermittelten Positionen der Mittelpunkte der Felgenbohrung (17) eine Unwucht des jeweiligen Rads (11) ermittelt wird.

2. Verfahren nach Anspruch 1, **dadurch gekennzeichnet, dass** die jeweilige berührungslose Messeinrichtung als Laserscanner (16) ausgebildet ist.

3. Verfahren nach Anspruch 1 oder 2, **dadurch gekennzeichnet, dass** am jedem Rad (11) einer Vorderachse und/oder einer Hinterachse mit jeweils einer berührungslosen Messeinrichtung die Unwucht des jeweiligen Rads (11) individuell ermittelt wird.

4. Verfahren nach einem der Ansprüche 1 bis 3, **dadurch gekennzeichnet, dass** dasselbe parallel und online zum Betreiben des Kraftfahrzeugs auf dem dynamischen Fahrzeugprüfstand ohne Verlängerung einer Prüfzeit des Kraftfahrzeugs auf dem Fahrzeugprüfstand automatisch durchgeführt wird.

5. Vorrichtung zur Unwuchtprüfung an mindestens einem Rad (11) eines Kraftfahrzeugs während dem Betreiben des Kraftfahrzeugs auf einem dynamischen Fahrzeugprüfstand, mit mindestens einer berührungslosen Messeinrichtung, wobei die jeweilige berührungslose Messeinrichtung auf eine Radnabe des jeweiligen im Hinblick auf eine mögliche Unwucht zu prüfenden Rads (11) parallel zur einer Achse, an welcher das jeweilige Rad (11) aufgehängt ist, und damit in Richtung einer Querachse des Kraftfahrzeugs ausgerichtet, in Richtung einer Hochachse des Kraftfahrzeugs in etwa in der Höhe der Radnabe und in Richtung einer Längsachse des Kraftfahrzeugs auf die Mitte der Radnabe gerichtet ist, **dadurch gekennzeichnet, dass** die jeweilige berührungslose Messeinrichtung je Umdrehung des jeweiligen Rads (11) mehrfach eine vordere und hintere Begrenzung oder eine untere und obere Begrenzung einer Felgenbohrung (17) detektiert, wobei dieselbe aus dem Abstand der vorderen und hinteren Begrenzung oder dem Abstand der unteren und oberen Begrenzung der Felgenbohrung (17) die Position des Mittelpunkts der jeweiligen Felgenbohrung (17) des jeweiligen Rads (11) bestimmt und aus der Veränderung der so je Umdrehung des jeweiligen Rads ermittelten Positionen der Mittelpunkte der Felgenbohrung (17) eine Unwucht des jeweiligen Rads ermittelt.

6. Vorrichtung nach Anspruch 5, **dadurch gekennzeichnet, dass** dieselbe Bestandteil eines dynamischen Fahrzeugprüfstands ist, wobei der Fahrzeugprüfstand für jedes im Hinblick auf eine mögliche Unwucht zu prüfenden Rad (11) eine als Laserscanner (16) ausgebildete, berührungslose Messeinrichtung aufweist.

7. Fahrzeugprüfstand mit einer Vorrichtung zur Unwuchtprüfung an mindestens einem Rad eines Kraftfahrzeugs nach einem oder mehreren der Ansprüche 5 bis 6.

## Claims

1. Method for testing the unbalance of at least one wheel (11) of a motor vehicle during the operation of the motor vehicle on a dynamic vehicle test stand, wherein the or each wheel (11) which is to be checked with respect to a possible unbalance is measured with a contactless measuring device which is aligned with a wheel hub of the respective wheel, wherein the respective contactless measuring device is directed towards the respective wheel (11) parallel to the one axle from which the respective wheel (11) is suspended, and therefore aligned in the direction of a transverse axis of the motor vehicle, in the direction of a vertical axis of the motor vehicle approximately at the level of the wheel hub and in the direction of a longitudinal axis of the motor vehicle at the centre of the wheel hub, and wherein the respective contactless measuring device measures the respective wheel (11) in such a way that a front and rear limitation and/or an upper and lower limitation of a rim drilled hole (17) are detected repeatedly per revolution of the respective wheel (11), and the position of the centre point of the rim drilled hole of the respective wheel is determined from the distance thereof, wherein an unbalance of the respective wheel (11) is determined from the change in the positions of the centre points of the rim drilled hole (17) which are determined per revolution of the respective wheel (11).

2. Method according to Claim 1, **characterized in that** the respective contactless measuring device is embodied as a laser scanner (16).

3. Method according to Claim 1 or 2, **characterized in that** at each wheel (11) of a front axle and/or of a rear axle, the unbalance of the respective wheel (11) is determined individually with a contactless measuring device in each case.

4. Method according to one of Claims 1 to 3, **characterized in that** the same is carried out automatically in parallel and online in order to operate the motor vehicle on the dynamic vehicle test stand without extending a test time of the motor vehicle on the vehicle test stand.

5. Device for testing the unbalance on at least one wheel (11) of a motor vehicle during the operation of the motor vehicle on a dynamic vehicle test stand, with at least one contactless measuring device, wherein the respective contactless measuring device is directed towards a wheel hub of the respective wheel (11) which is to be checked with respect to a possible unbalance, parallel to the one axle from which the respective wheel (11) is suspended, and therefore aligned in the direction of a transverse axis of the motor vehicle, in the direction of a vertical axis of the motor vehicle approximately at the level of the wheel hub and in the direction of a longitudinal axis of the motor vehicle at the centre of the wheel hub, **characterized in that** the respective contactless measuring device detects repeatedly a front and rear limitation or a lower and upper limitation of a rim drilled hole (17) per revolution of the respective wheel (11), wherein said measuring device determines the position of the centre point of the respective rim drilled hole (17) of the respective wheel (11) from the distance between the front and rear limitations or the distance between the lower and upper limitations of the rim drilled hole (17), and determines an unbalance of the respective wheel from the change in the positions of the centre points of the rim drilled hole (17) which are determined per revolution of the respective wheel.

6. Device according to Claim 5, **characterized in that** said device is a component of a dynamic vehicle test stand, wherein the vehicle test stand has a contactless measuring device which is embodied as a laser scanner (16) for each wheel (11) which is to be tested with respect to a possible unbalance.

7. Vehicle test stand having a device for testing the unbalance on at least one wheel of a motor vehicle according to one or more of Claims 5 to 6.

## Revendications

1. Procédé d'essai de l'équilibrage d'au moins une roue (11) d'un véhicule automobile pendant le fonctionnement du véhicule automobile sur un banc d'essai dynamique de véhicules, dans lequel la ou chaque roue (11) à contrôler par rapport à un possible balourd est mesurée avec un dispositif de mesure sans contact aligné sur un moyeu de roue de la roue respective, dans lequel le dispositif de mesure sans contact respectif est orienté sur la roue respective (11), parallèlement à un axe sur lequel la roue respective (11) est suspendue, et dès lors aligné dans la direction d'un axe transversal du véhicule automobile, dans la direction d'un axe vertical du véhicule automobile environ à la hauteur du moyeu de roue et dans la direction d'un axe longitudinal du véhicule automobile au milieu du moyeu de roue, et dans lequel le dispositif de mesure sans contact respectif mesure la roue respective (11), de telle manière que, à chaque révolution de la roue respective (11), une limitation antérieure et postérieure ou une limitation supérieure et inférieure d'un alésage de jante (17) soit détectée plusieurs fois et que la position du point central de l'alésage de jante de la roue respective soit déterminée à partir de la distance de celles-ci, dans lequel un balourd de la roue respective (11) est déterminé à partir de la variation des positions des points centraux de l'alésage de jante (17) ainsi déterminées à chaque révolution de la roue respective (11).

2. Procédé selon la revendication 1, **caractérisé en ce que** le dispositif de mesure sans contact respectif est constitué par un scanneur à laser (16).

3. Procédé selon la revendication 1 ou 2, **caractérisé en ce que** l'on détermine le balourd de la roue respective (11) à chaque roue (11) d'un essieu avant et/ou d'un essieu arrière avec chaque fois un dispositif de mesure sans contact.

4. Procédé selon l'une quelconque des revendications 1 à 3, **caractérisé en ce que** l'on effectue le même procédé automatiquement en parallèle et en ligne pour le fonctionnement du véhicule automobile sur le banc d'essai dynamique de véhicules sans prolongation du temps de contrôle du véhicule automobile sur le banc d'essai de véhicules.

5. Dispositif d'essai de l'équilibrage d'au moins une roue (11) d'un véhicule automobile pendant le fonctionnement du véhicule automobile sur un banc d'essai dynamique pour véhicules, avec au moins un dispositif de mesure sans contact, dans lequel le dispositif de mesure sans contact respectif est orienté sur un moyeu de roue de la roue respective (11) à contrôler par rapport à un possible balourd, parallèlement à un axe, sur lequel la roue respective (11) est suspendue, et dès lors orienté dans la direction d'un axe transversal du véhicule automobile, dans la direction d'un axe vertical du véhicule automobile environ à la hauteur du moyeu de roue et dans la direction d'un axe longitudinal du véhicule automobile au milieu du moyeu de roue, **caractérisé en ce que** le dispositif de mesure sans contact respectif détecte plusieurs fois à chaque révolution de la roue respective (11) une limitation antérieure et postérieure ou une limitation inférieure et supérieure de l'alésage de jante (17), dans lequel celui-ci détermine à partir de la distance de la limitation antérieure et postérieure ou de la distance de la limitation inférieure et supérieure de l'alésage de jante (17) la position du point central de l'alésage de jante respectif (17) de la roue respective (11) et détermine, à partir de la variation des positions des points centraux de l'alésage de jante (17) ainsi déterminées à chaque révolution de la roue respective, un balourd de la roue respective.

6. Dispositif selon la revendication 5, **caractérisé en ce que** celui-ci est un composant d'un banc d'essai dynamique de véhicules, dans lequel le banc d'essai de véhicules présente, pour chaque roue (11) à contrôler par rapport à un possible balourd, un dispositif de mesure sans contact constitué par un scanneur à laser (16).

7. Banc d'essai de véhicules avec un dispositif d'essai de l'équilibrage d'au moins une roue d'un véhicule automobile selon une ou plusieurs des revendications 5 à 6.
